# EUROPÄISCHE PATENTSCHRIFT

(11) **EP 3 784 937 B1**
(45) Veröffentlichungstag und Bekanntmachung des Hinweises auf die Patenterteilung: **12.07.2023**
(21) Anmeldenummer: 19723333.1
(22) Anmeldetag: 24.04.2019
(51) Int. Cl.: F16K 37/00

(54) **VERFAHREN ZUM ÜBERWACHEN DER FUNKTION EINES STELLVENTILS, VORRICHTUNG ZUR DURCHFÜHRUNG EINES SOLCHEN VERFAHRENS SOWIE STELLVENTIL MIT EINER SOLCHEN VORRICHTUNG**
METHOD FOR MONITORING THE FUNCTION OF A CONTROL VALVE, DEVICE FOR CARRYING OUT A METHOD OF THIS KIND AND CONTROL VALVE HAVING A DEVICE OF THIS KIND
PROCÉDÉ POUR CONTRÔLER LA FONCTION D'UNE VANNE AUTOMATIQUE, DISPOSITIF POUR METTRE EN OEUVRE UN TEL PROCCÉDÉ ET VANNE AUTOMATIQUE COMPRENANT UN TEL DISPOSITIF

(30) Priorität: 24.04.2018 DE 102018109865
(43) Veröffentlichungstag der Anmeldung: 03.03.2021
(73) Patentinhaber: Samson Aktiengesellschaft, 60314 Frankfurt am Main (DE)
(72) Erfinder: KAH, Harald, 65611 Brechen (DE); MELLINGER, Christian, 63179 Obertshausen (DE)
(74) Vertreter: Schmid, Nils T.F.
(86) Internationale Anmeldenummer: PCT/EP2019/060516
(87) Internationale Veröffentlichungsnummer: WO 2019/206997

(56) Entgegenhaltungen:
- WO-A1-2015/031416
- DE-B3-102009 022 891
- GB-A- 2 548 566
- US-A1- 2011 260 085

## Beschreibung

Die vorliegende Erfindung betrifft ein Verfahren zum Überwachen des Auftretens von Kavitation in einem Stellventil und/oder auf das Stellventil wirkenden Fluidschlägen, einer prozesstechnischen Anlage, wie einer chemischen Anlage, einer Lebensmittel verarbeitenden Anlage, eines Kraftwerks oder dergleichen. Ferner betrifft die vorliegende Erfindung eine Vorrichtung, die dazu eingerichtet ist, ein solches Verfahren auszuführen. Die Erfindung betrifft auch ein Stellventil mit einer solchen Vorrichtung.

Ein Stellventil, wie ein Notschließventil oder ein Regelungsventil, dient dazu, eine Mediumströmung, insbesondere eine Fluidströmung, einer prozesstechnischen Anlage zu steuern und/oder einzustellen. Das Stellventil kann mit Hilfsenergie, wie pneumatischer Hilfsenergie, betrieben werden, wobei insbesondere ein vorzugsweise pneumatischer Stellantrieb über einen insbesondere elektropneumatischen Stellungsregler betätigt werden kann. Das Stellventil kann alternativ oder zusätzlich eine Pumpe umfassen.

Bei Stellventilen, welche eine Prozessmediumströmung einer prozesstechnischen Anlage beeinflussen, insbesondere steuern und/oder regeln, können verschleißbedingte Schäden auftreten. Eine Prozessfluidströmung mit einem hohen Festkörperanteil kann zu verstärktem Verschleiß an dem Stellventil führen. Insbesondere Betriebsphänomene, wie Korrosion, Abrasion, Kavitation, auf das Stellventil wirkenden Fluidschlägen, wie Dampf- oder Waserschlägen, oder Flashing, können zu einem verstärkten Verschleiß des Stellventils führen. Durch Verschleiß kann es beispielsweise zu Leckage kommen. Die Leckage kann zu einem Produktverlust und/oder einem weniger effizienten Prozess, möglicherweise sogar zu einem Sicherheitsrisiko für die gesamte Anlage führen. Die Überwachung von Verschleißerscheinungen, insbesondere Kavitation und/oder auf das Stellventil wirkenden Fluidschlägen, während des Betriebs einer prozesstechnischen Anlage hat daher eine große Bedeutung für die Funktionsfähigkeit und die Verlässlichkeit des Stellventils in der prozesstechnischen Anlage. Eine Früherkennung von Stellventilschäden ist zu erreichen, um einen vollständigen Ausfall des Stellventils oder eine Unterbrechung des Anlagebetriebs beispielsweise aufgrund von akuten Wartungs- und Reparaturarbeiten an der prozesstechnischen Anlage zu vermeiden.

Es ist bekannt, die Schallemissionen des Stellventils akustisch aufzunehmen und auszuwerten. Beispielsweise geht aus WO 2015/031416 eine Vorrichtung zum Bestimmen und Überwachen von Kavitation im Inneren eines Stellgeräts hervor. Akustische Emissionssensoren sind dabei derart an der Vorrichtung angebracht, dass sie die aufgrund von Kavitation entstehenden erhöhten Schallwellen detektieren können. WO 2015/031416 beschreibt ein Diagnoseverfahren, bei dem Positionsdaten des Stellventils dazu verwendet werden, potentiell problematische Betriebszustände basierend auf einem Kavitationslevel, das mittels der akustischen Sensordaten bestimmt wird, je Stellventilposition zu identifizieren. Diese Positionsdaten werden dann zu erwartenden Kavitationslevelgrößen für die jeweilige Stellgliedposition zugeordnet und mit den tatsächlich gemessenen Kavitationslevelgrößen verglichen. Aus diesem Vergleich lassen sich Rückschlüsse auf erhöhte Kavitationserscheinungen ziehen.

Dabei handelt es sich jedoch um ein kostenintensives Verfahren. Insbesondere die zusätzlichen akustischen Sensoren sowie die zusätzlichen Software- und Hardwarekomponenten zur Verarbeitung der Sensordaten bringen erhöhte Kosten mit sich. Darüber hinaus erhöht sich insbesondere aufgrund der zusätzlichen akustischen Sensoren das Risiko von Betriebsfehlern und -ausfällen. Des Weiteren ist die Zuordnung der Stellventilposition zu zu erwartenden, mittels akustischen Sensordaten bestimmten Kavitationslevelgrößen ungenau.

Aus DE 10 2009 022 891 B3 ist ein Verfahren zur elektronischen Verschleißzustandsermittlung bei einer Ventilanordnung bekannt. US 2011/0260085 A1 offenbart ein Magnetventil mit Sensorik zur Bestimmung eines Hubs, einer Geschwindigkeit und/oder einer Beschleunigung eines bewegbaren Teils des Ventils als Indikation eines Fehl- und eines Normalbetriebs.

Es ist daher Aufgabe der Erfindung, die Nachteile aus dem bekannten Stand der Technik zu überwinden, insbesondere ein einfacheres, kostengünstigeres und deutlich präziseres Verfahren zum Überwachen der Funktion eines Stellventils, beispielsweise das Auftreten von Kavitation und/oder auf das Stellventil wirkenden Fluidschlägen, bereitzustellen. Es ist ferner Aufgabe der Erfindung, eine einfachere, kostengünstigere und deutlich präzisere Vorrichtung zum Überwachen der Funktion eines Stellventils, beispielsweise das Auftreten von Kavitation und/oder auf das Stellventil wirkenden Fluidschlägen, bereitzustellen.

Diese Aufgabe wird durch die Merkmale der Ansprüche 1, 10 und 12 gelöst. Danach ist ein Verfahren beziehungsweise eine Vorrichtung zum Überwachen des Auftretens von Kavitation in einem Stellventil und/oder auf das Stellventil wirkenden Fluidschlägen, einer prozesstechnischen Anlage, wie einer chemischen Anlage, einer Lebensmittel verarbeitenden Anlage, eines Kraftwerks oder dergleichen, vorgesehen. Ferner ist auch ein Stellventil mit einer solchen Vorrichtung vorgesehen.

Erfindungsgemäß wird bei dem Verfahren die Position des Stellventils vorzugsweise schrittweise oder kontinuierlich erfasst. Es kann sich dabei beispielsweise um die Position eines Stellglieds des Stellventils handeln, welches zum Verhindern und/oder Freigeben einer Prozessfluidströmung durch das Stellventil eine vorzugsweise translatorische Hubbewegung durchführt. Entlang des Verfahrens des Stellglieds, also während einer Hubbewegung, wird die Position des Stellglieds kontinuierlich oder schrittweise erfasst. Auf diese Weise wird erfasst, in welcher Stellung sich das Stellglied zu einem bestimmten Zeitpunkt, zu dem die Position des Stellglieds erfasst wurde, befindet. Alternativ und/oder zusätzlich kann die Position des Stellventils anhand der Position eines mit dem Stellglied gekoppelten Stellungsreglers, der dazu eingerichtet sein kann, eine vorgegebene Stellventil-Sollposition, insbesondere Stellglied-Sollposition, herzustellen, erfasst werden. Bei einer kontinuierlichen, insbesondere analogen, Erfassung wird die Stellventilposition stufenlos und unterbrechungsfrei ermittelt. Bei einer schrittweisen, insbesondere digitalen, Erfassung erfolgt die Bestimmung der Stellventilposition durch eine stufenweise Verarbeitung der Eingangsdaten bzw. Messdaten. Der digitale Verlauf der Stellventilposition kann aus einem analogen Verlauf, d. h. dem zeitlich kontinuierlichen Verlauf der Stellventilposition, vorzugsweise durch eine Abtastung gebildet werden, welche zu definierten Zeitpunkten erfolgt.

Anhand der erfassten Stellventilpositionen wird eine Betriebsgeschwindigkeit des Stellventils ermittelt. Unter Betriebsgeschwindigkeit wird diejenige Geschwindigkeit des Stellventils verstanden, die im Betrieb beim Verfahren des Stellventils zum Regeln der Prozessfluidströmung, insbesondere zum Verhindern und/oder Freigeben der Prozessfluidströmung durch das Stellventil, vorherrscht. Beispielsweise kann die ermittelte Betriebsgeschwindigkeit eine Betriebsgeschwindigkeit des Stellglieds und/oder des Stellungsreglers sein. Es hat sich überraschenderweise herausgestellt, dass sich die Betriebsgeschwindigkeit des Stellventils vorzugsweise ausschließlich anhand der erfassten Stellventilpositionen zuverlässig und genau ermitteln lässt. Dabei handelt es sich um ein sehr kostengünstiges Verfahren, da neben der Stellventilposition, die beim Vorhandensein eines Stellungsreglers ohnehin kontinuierlich oder schrittweise erfasst wird, keine zusätzlichen Betriebszustände des Stellventils zu erfassen sind. Dass die Position des Stellventils beim Vorhandensein eines Stellungsreglers ohnehin erfasst wird, liegt daran, dass zum Regeln des Stellventils, also zum Einstellen einer vorgegebenen Stellventil-Sollposition, die Stellventilpositionen in der Regel bekannt sein müssen. Wenn also ein Stellungsregler vorgesehen ist, kommt der Vorteil der Erfindung besonders zum Vorschein, da lediglich auf die zum Regeln notwendigen Stellventilpositionen zurückgegriffen werden muss, um eine Betriebsgeschwindigkeit zu ermitteln.

Bei dem Verfahren wird eine einem Fehlbetrieb oder einem Idealbetrieb des Stellventils zugeordnete Referenzgeschwindigkeit bestimmt. Der Fehlbetrieb liegt bei Kavitation und/oder auf das Stellventil wirkenden Fluidschlägen, wie Dampfschlägen oder Wasserschlägen, vor. Diese Erscheinungen haben erhöhte Belastungen für die Stellventilkomponenten zur Folge. Insbesondere da Kavitation direkt an bzw. hinter einer Drosselstelle entsteht, sind insbesondere Ventilsitz, Ventilkegel inklusive der Dichtkanten bzw. Dichtflächen und auch Ventilgehäuse am stärksten betroffen. Es entstehen Schädigungen in Form einer Zerstörung der Oberflächen der jeweiligen Stellventilkomponenten, die in erhöhtem Verschleiß, plastischer Verformung bis hin zur Rissbildung und Partikelabtrag resultieren. Als Folge kann es dazu kommen, dass das Stellventil nicht mehr vollständig dicht schließt und/oder sich die Regelgüte und/oder der Arbeitsbereich des Stellventils verändert bzw. verschlechtert, was auch zu einem frühzeitigen Versagen des Stellventils führen kann. Insbesondere Kavitation und/oder auf das Stellventil wirkende Fluidschläge können auf das Stellventil einwirkende Druckstöße verursachen, die von einem Normal- oder Idealbetrieb abweichende, insbesondere erhöhte, d. h. über denen bei einem Normal- oder Idealbetrieb vorliegenden, Geschwindigkeits- und/oder Beschleunigungswerte des Stellventils bewirken. Normal- oder Idealbetrieb liegt bei einem Stellventil vor, dessen Regelgüte und/oder Arbeitsbereich nicht beeinträchtigt ist. Insbesondere ist von einem Normal- oder Idealbetrieb bei einem verschleiß- und/oder kavitationsfreien Stellventil auszugehen. Je nach Bedarf kann die Referenzgeschwindigkeit ein den Fehlbetrieb oder ein den Idealbetrieb kennzeichnender Geschwindigkeitswert sein.

Gemäß dem erfindungsgemäßen Verfahren wird die Betriebsgeschwindigkeit mit der Referenzgeschwindigkeit verglichen, insbesondere um Rückschlüsse auf den Betriebszustand des Stellventils ziehen zu können. Beispielsweise kann auf Kavitation und/oder auf das Stellventil wirkende Fluidschläge geschlossen werden. Unabhängig davon, ob als Referenzgeschwindigkeit eine Fehlbetrieb-Referenzgeschwindigkeit oder eine Idealbetrieb-Referenzgeschwindigkeit bestimmt wurde, kann ein Vergleich zwischen der ermittelten Betriebsgeschwindigkeit und der Referenzgeschwindigkeit durchgeführt werden. Als Vorteil ergibt sich ein besonders einfaches, kostengünstiges Verfahren, das ohne zusätzliche Sensor- und/oder Auswerteeinrichtungen auskommt. Es hat sich nämlich überraschenderweise herausgestellt, dass die erfassten Stellventilpositionen ebenfalls dazu verwendet werden können, untypische, das heißt von einem Idealbetrieb abweichende, Geschwindigkeitswerte und/oder Beschleunigungswerte, vorzugsweise untypische Änderungen der Betriebsgeschwindigkeit und/oder der Betriebsbeschleunigung, zu ermitteln. Um die Funktion des Stellventils zu überwachen, kann auf die anhand der erfassten Stellventilpositionen ermittelte Betriebsgeschwindigkeit zurückgegriffen werden und ein Vergleich mit einer Referenzgeschwindigkeit durchgeführt werden. Insbesondere ist ein Vergleich der ermittelten Betriebsgeschwindigkeit mit der bestimmten Referenzgeschwindigkeit ausreichend, um die Funktion des Stellventils zuverlässig und genau überwachen zu können.

Vorzugsweise basiert der Erfindungsgedanke auf der Erkenntnis, dass Stellventile einem stellventiltypischen Weg-Zeit-Bewegungsprofil beim Verfahren des Stellventils während des Betriebs folgen. Zu jedem Zeitpunkt definiert das Bewegungsprofil eine bestimmte Betriebs-Verfahrgeschwindigkeit bzw. eine Betriebs-Verfahrbeschleunigung. Somit kann zu jedem beliebigen Betriebszeitpunkt aus dem Weg-Zeit-Bewegungsprofil eine Betriebsgeschwindigkeit bzw. eine Betriebsbeschleunigung abgeleitet werden, die mit einer Referenzgeschwindigkeit verglichen werden kann, um auf Fehlbetrieb rückzuschließen, insbesondere um unerwünschte Dampfschläge oder Kavitation zu identifizieren.

Bei einer beispielhaften Ausführung des Verfahrens wird die Betriebsgeschwindigkeit aus einer zwischen wenigstens zwei aufeinanderfolgenden Stellventilpositionen erfassten Änderung der Stellventilposition ermittelt. Vorzugsweise werden als Stellventilpositionen die Stellgliedpositionen erfasst. Alternativ oder zusätzlich können die Stellungsreglerpositionen erfasst werden. Beispielsweise kann die Betriebsgeschwindigkeit auch aus der Änderung der Stellventilposition zwischen genau zwei aufeinanderfolgenden Stellventilpositionen ermittelt werden. Es ist auch denkbar, die Betriebsgeschwindigkeit aus der Änderung der Stellventilposition mehrerer aufeinanderfolgender Stellventilpositionen zu ermitteln, wobei es beispielsweise denkbar ist, eine Durchschnittsgeschwindigkeit von mehreren aufeinanderfolgenden ermittelten Betriebsgeschwindigkeiten, die jeweils aus der Änderung zweier aufeinanderfolgender Stellventilpositionen zu ermitteln sind, bestimmt werden. Es ist auch möglich, die Betriebsgeschwindigkeit aus der erfassten Änderung der Stellventilposition zwischen einer ersten erfassten Stellventilposition und einer zuletzt erfassten, nicht unmittelbar auf die erste erfasste Stellposition folgende, Stellventilposition zu ermitteln. Des Weiteren ist es möglich, dass eine Betriebsbeschleunigung des Stellventils aus einer zwischen wenigstens zwei aufeinanderfolgenden vorzugsweise wie oben beschriebenen ermittelten Stellventilbetriebsgeschwindigkeiten erfassten Änderung der Stellventilbetriebsgeschwindigkeit ermittelt wird. Beispielsweise können hierzu die Stellgliedbetriebsgeschwindigkeiten und/oder die Stellungsreglerbetriebsgeschwindigkeiten herangezogen werden. Die Ausführungen hinsichtlich der Ermittlung der Betriebsgeschwindigkeit aus den Stellventilpositionen gelten in analoger Weise für die Ermittlung der Betriebsbeschleunigung aus den ermittelten Stellventilbetriebsgeschwindigkeiten. Ein zeitlicher Abstand zwischen zwei erfassten aufeinanderfolgenden Stellventilpositionen, bzw. Stellventilbetriebsgeschwindigkeiten, ist vorzugsweise stellventilspezifisch auszuwählen. Der zeitliche Abstand sollte jedenfalls derart klein gewählt werden, dass eine exakte und zuverlässige Bestimmung bzw. Nachverfolgung der Stellventilposition möglich ist. Vorzugsweise sollte der zeitliche Abstand derart klein sein, dass eine Detektion der Kavitation und/oder der auf das Stellventil wirkenden Fluidschläge gewährleistet ist. Insbesondere hat bei der digitalen Erfassung die Abtastung in derart zeitlichen, insbesondere kleinen, Abständen zu erfolgen.

Gemäß einer weiteren beispielhaften Ausführung des Verfahrens wird die einem Fehlbetrieb zugeordnete Referenzgeschwindigkeit aus einer Datenbank ausgewählt. Die Datenbank kann beispielsweise stellventilspezifische Erfahrungswerte für einen Fehlbetrieb enthalten. Es hat sich herausgestellt, dass sich das Weg-Zeit-Bewegungsprofil beim Verfahren des Stellventils aufgrund von Kavitation und/oder von auf das Stellventil wirkenden Fluidschlägen über die Betriebszeit verändert. Aus dieser Erkenntnis haben sich Erfahrungswerte für Weg-Zeit-Bewegungsprofile eines Stellventils bei Fehlbetrieb ableiten lassen. Insofern definieren die Weg-Zeit-Bewegungsprofile bei Fehlbetrieb Fehlbetrieb-Referenzgeschwindigkeiten. Die einem Fehlbetrieb zugeordnete Referenzgeschwindigkeit kann auch bei einer Initialisierung oder Kalibrierung des Stellventils erfasst werden. Für gewöhnlich werden Stellventile vor Inbetriebnahme initialisiert, um das Stellventil betriebsbereit zu machen. Außerdem kann es nötig sein, das Stellventil vor oder zumindest zu Beginn der Inbetriebnahme derart zu kalibrieren, dass ein bestimmter Betrieb eingestellt ist. Beispielsweise kann dabei eine, vorzugsweise stellventilspezifische und/oder stellgliedspezifische, maximale Verfahrgeschwindigkeit des Stellventils ermittelt werden. Zufällig wurde entdeckt, dass eine Sicherheitseinrichtung des Stellventils, die vorzugsweise zwischen dem Stellungsregler und dem Stellglied angeordnet ist, bei Fehlbetrieb ausgelöst wird. Darauf basierende Untersuchungen haben ergeben, dass das Stellventil beim Auftreten von insbesondere Kavitation und/oder auf das Stellventil wirkenden Fluidschlägen deutlich erhöhte Beschleunigungsspitzen und/oder Geschwindigkeitsspitzen erfährt, die für das Auslösen der Sicherheitsrichtung verantwortlich waren. Es wurde überraschenderweise herausgefunden, dass diese Geschwindigkeits- und/oder Beschleunigungswerte deutlich über den stellventilspezifischen, vorzugsweise maximalen, Verfahrgeschwindigkeiten des Stellventils zum Regeln der Prozessfluidströmung liegen. Daher lässt das erfindungsgemäße Verfahren auf einfache Weise einen Rückschluss auf Fehlbetrieb, wie Kavitation und/oder auf das Stellventil wirkende Fluidschläge, zu.

Gemäß einer Weiterbildung des erfindungsgemäßen Verfahrens wird ein Fehlbetrieb des Stellventils identifiziert, wenn die Betriebsgeschwindigkeit des Stellventils der aus der Datenbank ausgewählten Fehlbetrieb-Referenzgeschwindigkeit entspricht oder diese übersteigt. Aufgrund der Tatsache, dass die Referenzgeschwindigkeit erfahrungsgemäß auf einen Fehlbetrieb des Stellventils hindeutet, kann durch diesen Vergleich auf einfache Weise ermittelt werden, ob das Stellventil derzeit bei einer Betriebsgeschwindigkeit betrieben wird, die erfahrungsgemäß nur bei einem Fehlbetrieb auftritt. Ein Fehlbetrieb des Stellventils kann auch dann identifiziert werden, wenn die ermittelte Betriebsgeschwindigkeit des Stellventils der aus der Initialisierung oder Kalibrierung des Stellventils erfassten Fehlbetrieb-Referenzgeschwindigkeit entspricht oder diese übersteigt. Die Fehlbetrieb-Referenzgeschwindigkeit wird vorzugsweise derart gewählt, dass ab dem Zeitpunkt, zu dem das Stellventil eine Betriebsgeschwindigkeit aufweist, die der Fehlbetrieb-Referenzgeschwindigkeit entspricht, ein Fehlbetrieb vorliegt. Gemäß einer beispielhaften Ausführung beträgt die aus der Initialisierung oder Kalibrierung des Stellventils erfasste Fehlbetrieb-Referenzgeschwindigkeit wenigstens 150 %, vorzugsweise 200 %, 250 %, 300 %, 350 %, 400 %, 450 % oder 500 %, der maximalen Verfahrgeschwindigkeit des Stellventils. Es ist klar, dass die maximale Verfahrgeschwindigkeit des Stellventils von dem jeweiligen Stellventil, insbesondere von dem jeweils eingesetzten Stellungsregler abhängt. Wie bereits erläutert, versucht Kavitation und/oder auf das Stellventil wirkende Fluidschläge Druckstöße, welche erhöhte Geschwindigkeits- und/oder Beschleunigungswerte am Stellventil verursachen. Es wurde herausgefunden, dass wenn die verursachten Geschwindigkeits- und/oder Beschleunigungsspitzen die maximale Verfahrgeschwindigkeit des Stellventils um wenigstens 150 % übersteigen, ein schädigender Fehlbetrieb des Stellventils vorliegt.

Gemäß einer beispielhaften Ausführung des erfindungsgemäßen Verfahrens wird die einem Idealbetrieb zugeordnete Referenzgeschwindigkeit aus einer Datenbank ausgewählt. Diese Datenbank kann stellventilspezifische Erfahrungswerte für einen Idealbetrieb enthalten. Es hat sich herausgestellt, dass sich das Weg-Zeit-Bewegungsprofil beim Verfahren des Stellventils aufgrund von Kavitation und/oder von auf das Stellventil wirkenden Fluidschlägen über die Betriebszeit verändert. Aus dieser Erkenntnis haben sich Erfahrungswerte für Weg-Zeit-Bewegungsprofile eines Stellventils bei Idealbetrieb ableiten lassen. Insofern definieren die Weg-Zeit-Bewegungsprofile bei Idealbetrieb Idealbetrieb-Referenzgeschwindigkeiten. Die einem Idealbetrieb zugeordnete Referenzgeschwindigkeit kann auch bei einer Initialisierung oder Kalibrierung des Stellventils erfasst werden. Für gewöhnlich werden Stellventile vor Inbetriebnahme initialisiert, um das Stellventil betriebsbereit zu machen. Außerdem kann es nötig sein, das Stellventil vor oder zumindest zu Beginn der Inbetriebnahme derart zu kalibrieren, dass ein bestimmter Betrieb eingestellt ist. Beispielsweise kann dabei eine, vorzugsweise stellventilspezifische und/oder stellgliedspezifische, maximale Verfahrgeschwindigkeit des Stellventils ermittelt werden. Zufällig wurde entdeckt, dass eine Sicherheitseinrichtung des Stellventils, die vorzugsweise zwischen dem Stellungsregler und dem Stellglied angeordnet ist, bei Fehlbetrieb ausgelöst wird. Darauf basierende Untersuchungen haben ergeben, dass das Stellventil beim Auftreten von insbesondere Kavitation und/oder auf das Stellventil wirkenden Fluidschlägen deutlich erhöhte Beschleunigungsspitzen und/oder Geschwindigkeitsspitzen erfährt, die für das Auslösen der Sicherheitsrichtung verantwortlich waren. Es wurde überraschenderweise herausgefunden, dass diese Geschwindigkeits- und/oder Beschleunigungswerte deutlich über den stellventilspezifischen, vorzugsweise maximalen, Verfahrgeschwindigkeiten des Stellventils zum Regeln der Prozessfluidströmung liegen. Daher lässt das erfindungsgemäße Verfahren auf einfache Weise einen Rückschluss auf Fehlbetrieb, wie Kavitation und/oder auf das Stellventil wirkende Fluidschläge, zu.

Gemäß einer Weiterbildung des erfindungsgemäßen Verfahrens wird ein Fehlbetrieb des Stellventils identifiziert, wenn die Betriebsgeschwindigkeit die aus der Datenbank ausgewählte Idealbetrieb-Referenzgeschwindigkeit übersteigt. Vorzugsweise wird ein Fehlbetrieb identifiziert, wenn die ermittelte Betriebsgeschwindigkeit wenigstens 150 %, vorzugsweise 200 %, 250 %, 300 %, 350 %, 400 %, 450 % oder 500 %, größer ist als die Idealbetrieb-Referenzgeschwindigkeit. Es wurde herausgefunden, dass bei Übersteigen der Betriebsgeschwindigkeit um wenigstens 150 % über die Idealbetrieb-Referenzgeschwindigkeit ein schädigender Fehlbetrieb vorliegt. Ein Fehlbetrieb kann beispielsweise auch identifiziert werden, wenn die Betriebsgeschwindigkeit die aus der Initialisierung oder Kalibrierung des Stellventils erfasste Idealbetrieb-Referenzgeschwindigkeit übersteigt. Insbesondere deutet eine Betriebsgeschwindigkeit, die die maximale Verfahrgeschwindigkeit des Stellventils um wenigstens 150 %, vorzugsweise 200 %, 250 %, 300 %, 350 %, 400 %, 450 % oder 500 % übersteigt, auf erhöhte Kavitationserscheinungen und/oder erhöhte auf das Stellventil wirkende Fluidschläge hin. Vorteilhafterweise ergibt sich ein einfaches, kostengünstiges und zuverlässiges Verfahren zum Überwachen der Funktion des Stellventils. Aufgrund der Tatsache, dass zum einen auf vorhandene Erfahrungswerte zugegriffen werden kann, um zum anderen, dass für die Funktionsüberwachung des Stellventils vorzugsweise lediglich die Stellventilpositionen und die daraus ableitetbaren Geschwindigkeitswerte beim Betrieb des Stellventils benötigt werden. Insbesondere beim Vorhandensein eines Stellungsreglers ist das Verfahren besonders vorteilhaft, da es einfach anwendbar ist und kaum Änderungen bedarf.

Gemäß einer beispielhaften Ausführung des erfindungsgemäßen Verfahrens wird das Auftreten eines Fehlbetriebs erfasst, verarbeitet und/oder gespeichert. Insbesondere wird das Auftreten eines Fehlbetriebs anhand des oben beschriebenen Vergleichs der Betriebsgeschwindigkeit mit der Referenzgeschwindigkeit erfasst. Es ist denkbar, das Auftreten des Fehlbetriebs zu triggern. Dies ist einfach und kostengünstig umzusetzen. Unter Triggern wird das Erzeugen eines Impulses, insbesondere eines Triggerimpulses, in Reaktion auf das Auftreten eines Fehlbetriebs verstanden. Vorzugsweise kann das Auftreten eines Fehlbetriebs verarbeitet, wie weiterverwendet, werden, um beispielsweise den erzeugten Triggerimpuls zum Überwachen der Funktion des Stellventils zu nutzen. Dies kann beispielsweise dadurch erreicht werden, dass die erzeugten Triggerimpulse wiederum erfasst, diagnostiziert und/oder kenntlich gemacht werden. Dazu kann beispielsweise das Auftreten des Fehlbetriebs gespeichert werden. Beispielsweise kann der erfasste Fehlbetrieb dazu verwendet werden, die Datenbank mit Referenzgeschwindigkeiten, vorzugsweise kontinuierlich, zu aktualisieren. Vorzugsweise werden insbesondere wenigstens zwei Triggerschwellen für Geschwindigkeitswerte definiert. Es ist auch denkbar, beispielsweise drei, vier, fünf oder mehr Triggerschwellen vorzusehen. Eine Triggerschwelle stellt vorzugsweise einen Wert dar, bei dem das Auftreten des Fehlbetriebs getriggert wird, also ab dem der oben genannte Triggerimpuls generiert wird. Beispielsweise können die wenigstens zwei Triggerschwellen in Abhängigkeit zu der bestimmten Referenzgeschwindigkeit ausgebildet werden. Zum Beispiel kann wenigstens eine Triggerschwelle für zulässige Geschwindigkeitswerte und wenigstens eine Triggerschwelle für unzulässige Geschwindigkeitswerte definiert werden. Bei einer bevorzugten Ausführung des Verfahrens werden die Betriebsgeschwindigkeitswerte mit den wenigstens zwei Triggerschwellenwerten verglichen. Es kann beispielsweise vorgesehen sein, dass die wenigstens eine Triggerschwelle für zulässige Geschwindigkeitswerte unterhalb des Werts für die Referenzgeschwindigkeit liegt und/oder die wenigstens eine Triggerschwelle für unzulässige Geschwindigkeitswerte oberhalb der Referenzgeschwindigkeit liegt. Mithilfe des Vergleichs der Betriebsgeschwindigkeit mit den Triggerschwellen kann sowohl das Auftreten eines Fehlbetriebs erfasst werden, als auch überwacht werden, ob sich der Betrieb des Stellventils verschlechtert. Dies ist beispielsweise dadurch möglich, dass die getriggerten Geschwindigkeitswerte für einen zulässigen Betrieb mit den getriggerten Geschwindigkeiten für einen unzulässigen Betrieb überwacht werden, wobei eine steigende Anzahl an unzulässigen Geschwindigkeitswerten auf einen zunehmend sich verschlechternden Betrieb, also einen kavitations- und/oder verschleißbehafteten, Betrieb des Stellventils hinweist. Es ist jedoch auch möglich, dass die wenigstens zwei Triggerschwellen oberhalb der Referenzgeschwindigkeit liegen. Beispielsweise kann eine erste Triggerschwelle etwas größer als die Referenzgeschwindigkeit sein, beispielsweise weniger als 150 % größer als die Referenzgeschwindigkeit. Die zweite der wenigstens zwei Triggerschwellen kann beispielsweise deutlich größer als die Referenzgeschwindigkeit sein, beispielsweise mehr als 150 % der Referenzgeschwindigkeit. Somit können Geschwindigkeitswerte, die auf einen weniger kritischen Fehlbetrieb hindeuten, herausgefiltert werden, beispielsweise wenn lediglich die zu der zweiten, größeren Triggerschwelle gehörenden Triggerimpulse verarbeitet und/oder gespeichert werden.

Gemäß einer Weiterbildung des erfindungsgemäßen Verfahrens wird das Überschreiten jeweils eines der wenigstens zwei Triggerschwellenwerte aufgezeichnet, vorzugsweise um die Betriebsgeschwindigkeit auszuwerten. Beispielsweise findet die Auswertung derart statt, das zulässige von unzulässigen Betriebsgeschwindigkeitswerten unterschieden werden. Dies kann, wie bereits oben beschrieben wurde, beispielsweise durch Triggern erfolgen. Alternativ oder zusätzlich kann dies auch durch das Aufzeichnen des Verlaufs der Betriebsgeschwindigkeit erfolgen, wobei in dem Verlauf kenntlich gemacht werden kann, wenn eine Triggerschwelle überschritten wurde. Vorzugsweise können die wenigstens zwei Triggerschwellenwerte derart ausgewählt und/oder der Verlauf der Betriebsgeschwindigkeit derart überwacht werden, dass auf ein Ausmaß, wie eine Intensität und/oder Dauer, des Fehlbetriebs rückgeschlossen werden kann. Beispielsweise ist es möglich, den Verlauf der Betriebsgeschwindigkeit aufzuzeichnen, insbesondere anhand eines Graphen. Ferner ist er möglich, die Vergleiche der Betriebsgeschwindigkeit mit den Triggerschwellen beispielsweise tabellarisch aufzuzeichnen. Vorzugsweise kann vorgesehen sein, dass anhand der Stärke des Überschreitens des jeweiligen Triggerschwellenwerts eine Klassifizierung der auf das Stellventil einwirkenden Geschwindigkeits- und/oder Beschleunigungsspitzen in Folge von Kavitation und/oder auf das Stellventil wirkenden Fluidschlägen vorgenommen wird. Somit können zum Beispiel zulässige von unzulässigen Kavitations und/oder Fluidschlägen unterschieden werden oder zwischen unzulässigen Schlägen derart unterschieden werden, dass auf ein Ausmaß des Fehlbetriebs rückgeschlossen wird.

Gemäß einer beispielhaften Ausführung des erfindungsgemäßen Verfahrens wird bei einem erfassten Fehlbetrieb ein vorzugsweise optisches und/oder akustisches Warnsignal ausgegeben. Dadurch kann ein erhöhter Verschleißgrad beziehungsweise Kavitationsgrad des Stellventils frühzeitig erkannt und somit ein frühzeitiges Versagen des Stellventils vermieden werden. Gemäß einer beispielhaften Ausführung wird ein Warnsignal vorzugsweise nur dann ausgegeben, wenn der Fehlbetrieb für eine vorbestimmte Kontrollzeit durchgehend erfasst wird. Alternativ oder zusätzlich kann vorgesehen sein, dass ein Warnsignal insbesondere nur dann ausgegeben wird, wenn eine vorbestimmte Kontrollanzahl an für einen Fehlbetrieb charakteristischen Betriebsgeschwindigkeiten ermittelt wird. Auf diese Weise kann sichergestellt werden, dass nicht nach einem oder geringfügigen erfassten Fehlbetriebszuständen sofort eine Warnung ausgegeben wird beziehungsweise auf ein beschädigtes Stellventil hingewiesen wird. Erst wenn eine vorbestimmte Zeit ein Fehlbetrieb vorliegt und/oder wenn eine vorbestimmte Anzahl an auf einen Fehlbetrieb hindeutender Betriebsgeschwindigkeit ermittelt wurde, wird eine Warnung ausgegeben. Insbesondere kann bei einem erfassten Fehlbetrieb eine Gegenmaßnahme eingeleitet werden. Dies kann beispielsweise automatisch erfolgen. Beispielsweise kann das Verfahren dazu ausgebildet sein, als Gegenmaßnahme bei einem erfassten Fehlbetrieb das Stellventil in eine Schließstellung zu bringen oder in eine vorbestimmte Sicherheitsstellung. Dazu kann es beispielsweise vorgesehen sein, dass bei einem erfassten Fehlbetrieb direkt auf den Stellungsregler des Stellventils zugegriffen wird, um das Stellventil in die gewünschte Sicherheitsposition zu verfahren.

Gemäß einem weiteren Aspekt der Erfindung, der mit den vorherigen Aspekten kombinierbar ist, ist eine Vorrichtung zum Überwachen der Funktion eines Stellventils, beispielsweise das Auftreten von Kavitation und/oder auf das Stellventil wirkenden Fluidschlägen, einer prozesstechnischen Anlage, wie einer chemischen Anlage, einer lebensmittelverarbeitenden Anlage, eines Kraftwerks oder dergleichen dazu eingerichtet, das oben beschriebene erfindungsgemäße Verfahren zum Überwachen der Funktion des Stellventils auszuführen.

Gemäß einer Weiterbildung der erfindungsgemäßen Vorrichtung umfasst die Vorrichtung einen insbesondere dem Stellungsregler und/oder dem Stellglied zugeordneten Positions- oder Stellungssensor. Vorzugsweise ist eine Hubbewegung des Stellventils, vorzugsweise des Stellglieds, in eine Drehbewegung eines an dem Stellventil drehbar gelagerten Hebelarms übertragbar. Der Hebelarm kann auch als Abtastarm bezeichnet werden. Die Drehbewegung des Hebelarms kann beispielsweise mittels einer vorzugsweise magnetischen Sensoreinrichtung erfassbar sein, insbesondere um die Position des Stellventils, insbesondere des Stellglieds, abzuleiten. Vorzugsweise umfasst die Sensorrichtung einen an dem Hebel angebrachten Magnet und einen ortsfest positionierten, dem Magnet zugewandten Magnetsensor. Gemäß einer beispielhaften Ausführung ist der Magnet derart an dem Hebelarm angebracht, dass der Magnetsensor bei einer Drehbewegung des Hebelarms eine Veränderung seines elektrischen Widerstands detektiert. Vorzugsweise wird die Veränderung des elektrischen Widerstands in ein Positionssignal des Stellventils umgewandelt. Dies kann, wie bereits geschrieben wurde, schrittweise oder kontinuierlich erfolgen. Vorzugsweise kann ein Wandler, wie ein A/D-Wandler, vorgesehen sein, um aus dem kontinuierlichen Verlauf digitale Signale zu bilden, die dann weiterverarbeitet und/oder gespeichert werden können.

Gemäß einem weiteren Aspekt der Erfindung, der mit dem vorigen Aspekt kombinierbar ist, umfasst ein Stellventil eine Vorrichtung zum Überwachen der Funktion des Stellventils, beispielsweise das Auftreten von Kavitation und/oder auf das Stellventil wirkenden Fluidschlägen, einer prozesstechnischen Anlage, wie einer chemischen Anlage, einer lebensmittelverarbeitenden Anlage, eines Kraftwerks oder dergleichen. Die Vorrichtung ist beispielsweise nach den oben beschriebenen bevorzugten Ausführungen ausgebildet. Insbesondere ist die Vorrichtung derart ausgebildet, dass sie das erfindungsgemäße Verfahren gemäß den oben beschriebenen bevorzugten Ausführungen ausführen kann.

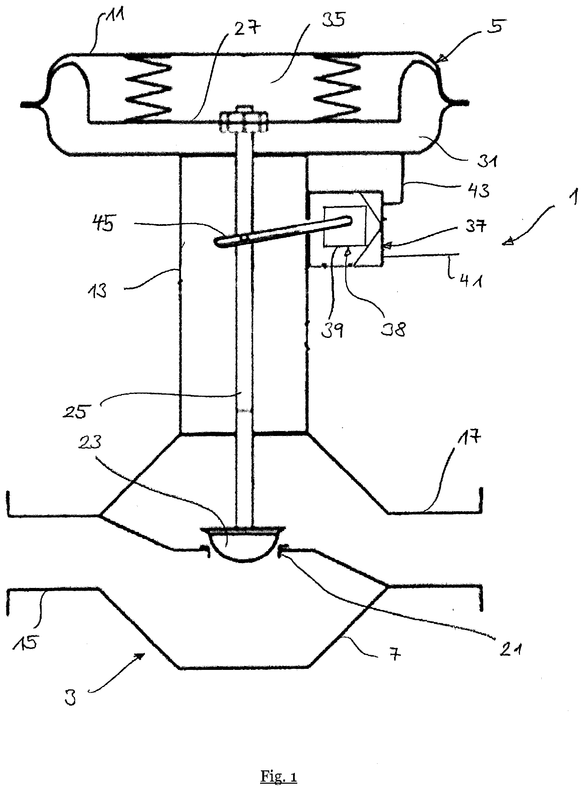

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, wobei
- Figur 1: eine Prinzipskizze eines erfindungsgemäßen Stellventils mit einer erfindungsgemäßen Vorrichtung zum Überwachung der Funktion eines Stellventils, die zum Ausführen des erfindungsgemäßen Verfahrens zum Überwachen der Funktion des Stellventils eingerichtet ist, zeigt.

In Figur 1 ist das erfindungsgemäße Stellventil mit einer erfindungsgemäßen Vorrichtung, die zum Ausführen des erfindungsgemäßen Verfahrens zum Überwachen der Funktion des Stellventils eingerichtet ist, dargestellt. Das Stellventil ist in der speziellen Ausführung der Figur 1 als ein vollständiges Feldgerät mit der Bezugsziffer 1 erweitert, dass ein Stellventil 3 und einen vorzugsweise pneumatischen Stellantrieb 5 umfasst, wobei ein Stellventilgehäuse 7 mit dem Antriebsgehäuse 11 über ein Joch 13 ortsfest getragen ist.

Das Stellventil 3 ist in ein Rohrsystem einer prozesstechnischen Anlage integriert, wobei der Rohransatz für die Strömungseingangsleitung mit der Bezugsziffer 15 versehen ist und eine Strömungsausgangsleitung mit der Bezugsziffer 17. Im Inneren des Stellventilgehäuses 7 ist ein Ventilsitz 21 ortsfest an der Innenseite des Stellventilgehäuses 7 befestigt. Der Ventilsitz 21 kooperiert mit einem Ventilglied 23 des Stellventils 7, das über eine Stellstange 25 von dem pneumatischen Stellantrieb 5 betätigt wird. Die Stellstange 25 erstreckt sich durch eine Öffnung im Oberteil des Stellventilgehäuses 7 längs des Jochs 13 in eine Durchführung im Stellantriebsgehäuse 11 und ist mit einer der beiden Arbeitskammern 31, 35 des pneumatischen Stellantriebs 5 trennenden Membran 27 fest verbunden.

Der Stellantrieb 5 hat eine Arbeitskammer 31 und eine mit Druckfedern 33 belegte Rückstellkammer 35. Die pneumatische Arbeitskammer 31 ist pneumatisch mit einem Stellungsregler 37 verbunden, der an eine Druckluftquelle 41 von etwa 6 bar angeschlossen sein kann.

Der Stellungsregler 37 hat einen pneumatischen Ausgang, der über eine Ausgangsleitung 43 mit der pneumatischen Arbeitskammer 31 gekoppelt ist. Der Stellungsregler 37 umfasst einen Positions- oder Stellungssensor 39, der die Position des Ventilglieds 23 über einen Hebelarm 45 erfasst. Hebelarm 45 kann als Abtastarm ausgebildet sein, um zeitdiskrete Positionssignale zu generieren. Der Hebelarm 45 ist drehbeweglich an der Stange 25 befestigt. Das folgende Beispiel dient lediglich zur Veranschaulichung der Funktionsweise zur Überwachung der Funktion des Stellventils anhand der mittels des Positionssensors ermittelten Stellventilpositionen.

Gemäß der beispielhaften Ausführung basiert der Positionssensor 39 auf einem magnetischen Messprinzip. Die Hubbewegung der Ventilstange 25 wird mittels des Hebelarms 45 in eine Drehbewegung gewandelt. Der Hebelarm 45 ist an eine Hebelarmwelle (nicht dargestellt) gekoppelt, welche im Wesentlichen eine Rotationsbewegung in Folge der Hubbewegung der Ventilstange 25 um ihre Hebelarmwellenlängsachse durchführt. Die Hebelarmwelle selbst ist im Gehäuse des Stellungsreglers 37 drehbar gelagert und weist an einem distalen Ende innerhalb des Stellungsreglers, bzw. des Stellungsreglergehäuses, einen Magnet (nicht dargestellt), vorzugsweise einen Dauermagneten, auf. Der Magnet ist Teil einer magnetischen Sensorrichtung 38, welche zur Erfassung der Drehbewegung der Hebelarmwelle ausgebildet ist. Die Sensoreinrichtung 38 umfasst ferner einen dem Magnet zugewandten, ortsfest innerhalb des Stellungsreglergehäuses 37 positionierten magnetempfindlichen Sensor (nicht dargestellt), wie einen auf dem anisotropen magnetoresistiven Effekt basierenden Sensor, vorzugsweise AMR-Sensor. Der Magnet ist derart an der Hebelarmwelle angebracht und wirkt derart mit dem magnetempfindlichen Sensor zusammen, dass der magnetempfindliche Sensor bei einer Drehbewegung der Hebelarmwelle, beziehungsweise des Hebelarms, in Folge einer Hubbewegung der Ventilstange 25, eine Veränderung seines elektrischen Widerstands detektiert. Aus dieser detektierten Veränderung wird eine Veränderung der Stellventilposition abgeleitet. Auf Basis der Stellventilpositionsänderung kann dann eine Betriebsgeschwindigkeit des Stellventils 3 erfasst, wie beispielsweise berechnet, werden, welche zur Überwachung der Funktion des Stellventils 3, insbesondere von Kavitation und/oder auf das Stellventil 3 wirkende Fluidschläge, mit einer bestimmten Referenzgeschwindigkeit, welche anhand des erfindungsgemäßen Verfahrens bestimmbar ist, verglichen werden kann.

Die in der vorstehenden Beschreibung und Figuren offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Stellgerät
- 3: Stellventil
- 5: Stellantrieb
- 7: Stellventilgehäuse
- 11: Antriebsgehäuse
- 13: Joch
- 15: Strömungseingangsleitung
- 17: Strömungsausgangsleitung
- 21: Ventilsitz
- 23: Ventilglied
- 25: Stellstange
- 27: Membran
- 31, 35: Arbeitskammer
- 33: Druckfeder
- 37: Stellungsregler
- 38: Sensoreinrichtung
- 39: Positionssensor
- 41: Druckluftquelle
- 43: Ausgangsleitung
- 45: Hebelarm

## Patentansprüche

1. Verfahren zum Überwachen des Auftretens von Kavitation in einem Stellventil (3) und/oder auf das Stellventil (3) wirkenden Fluidschlägen, einer prozesstechnischen Anlage, wie einer chemischen Anlage, einer Lebensmittel verarbeitenden Anlage, eines Kraftwerks oder dergleichen, wobei:
- die Position des Stellventils (3) erfasst wird;
- anhand der erfassten Stellventilpositionen eine Betriebsgeschwindigkeit des Stellventils (3) ermittelt wird; und
- eine einem Fehlbetrieb bei Kavitation und/oder auf das Stellventil (3) wirkenden Fluidschlägen oder einem Idealbetrieb des Stellventils (3) zugeordnete Referenzgeschwindigkeit bestimmt wird; und
- die Betriebsgeschwindigkeit mit der Referenzgeschwindigkeit verglichen wird.

2. Verfahren nach Anspruch 1, wobei die Betriebsgeschwindigkeit aus einer zwischen wenigstens zwei aufeinanderfolgenden Stellventilpositionen, vorzugsweise Stellgliedpositionen, erfassten Änderung der Stellventilposition ermittelt wird, wobei insbesondere eine Betriebsbeschleunigung des Stellventils (3) aus einer zwischen wenigstens zwei aufeinanderfolgenden Stellventilbetriebsgeschwindigkeiten, vorzugsweise Stellgliedbetriebsgeschwindigkeiten, erfassten Änderung der Stellventilbetriebsgeschwindigkeit ermittelt wird.

3. Verfahren nach einem der vorstehenden Ansprüche, wobei die einem Fehlbetrieb zugeordnete Referenzgeschwindigkeit aus einer Datenbank ausgewählt, wobei insbesondere die Datenbank stellventilspezifische Erfahrungswerte für Fehlbetrieb enthält, oder bei einer Initialisierung oder Kalibrierung des Stellventils (3) erfasst wird, wobei insbesondere bei der Initialisierung oder Kalibrierung eine maximale, insbesondere stellungsreglerspezifische, Verfahrgeschwindigkeit des Stellventils (3) ermittelt wird.

4. Verfahren nach Anspruch 3, wobei wenn die Betriebsgeschwindigkeit der aus der Datenbank ausgewählten Fehlbetrieb-Referenzgeschwindigkeit entspricht oder diese übersteigt, oder wenn die Betriebsgeschwindigkeit der aus der Initialisierung oder Kalibrierung des Stellventils erfassten Fehlbetrieb-Referenzgeschwindigkeit entspricht oder diese übersteigt, ein Fehlbetrieb des Stellventils (3) identifiziert wird, wobei insbesondere die aus der Initialisierung oder Kalibrierung des Stellventils erfasste Fehlbetrieb-Referenzgeschwindigkeit wenigstens 150 %, vorzugsweise 200 %, 250 %, 300 %, 350 %, 400 %, 450 % oder 500 %, der maximalen Verfahrgeschwindigkeit des Stellventils entspricht.

5. Verfahren nach einem der vorstehenden Ansprüche, wobei die einem Idealbetrieb zugeordnete Referenzgeschwindigkeit aus einer Datenbank ausgewählt, wobei insbesondere die Datenbank stellventilspezifische Erfahrungswerte für Idealbetrieb enthält, oder bei einer Initialisierung oder Kalibrierung des Stellventils (3) erfasst wird, wobei insbesondere bei der Initialisierung oder Kalibrierung eine maximale, insbesondere stellungsreglerspezifische, Verfahrgeschwindigkeit des Stellventils (3) ermittelt wird.

6. Verfahren nach Anspruch 5, wobei wenn die Betriebsgeschwindigkeit die aus der Datenbank ausgewählte Idealbetrieb-Referenzgeschwindigkeit übersteigt, insbesondere wenigstens 150 %, vorzugsweise 200 %, 250 %, 300 %, 350 %, 400 %, 450 % oder 500 %, größer ist als die Idealbetrieb-Referenzgeschwindigkeit, oder wenn die Betriebsgeschwindigkeit die aus der Initialisierung oder Kalibrierung des Stellventils (3) erfasste Idealbetrieb-Referenzgeschwindigkeit übersteigt, insbesondere die maximale Verfahrgeschwindigkeit des Stellventils um wenigstens 150 %, vorzugsweise 200 %, 250 %, 300 %, 350 %, 400 %, 450 % oder 500 % übersteigt, ein Fehlbetrieb des Stellventils (3) identifiziert wird.

7. Verfahren nach einem der vorstehenden Ansprüche, wobei das Auftreten eines Fehlbetriebs erfasst, vorzugsweise getriggert, verarbeitet und/oder gespeichert wird, wobei insbesondere wenigstens zwei Triggerschwellen für Geschwindigkeitswerte, vorzugsweise wenigstens eine Triggerschwelle für zulässige Geschwindigkeitswerte und wenigstes eine Triggerschwelle für unzulässige Geschwindigkeitswerte, definiert werden und die Betriebgsgeschwindigkeitswerte mit den wenigstens zwei Triggerschwellenwerten verglichen werden.

8. Verfahren nach Anspruch 7, wobei das Überschreiten jeweils eines der wenigstens zwei Triggerschwellenwerte aufgezeichnet wird, um die Betriebgsgeschwindigkeit auszuwerten, vorzugsweise um unzulässige von zulässigen Betriebgsgeschwindigkeitswerten zu unterscheiden, wobei insbesondere die wenigstens zwei Triggerschwellenwerte derart ausgewählt und der Verlauf der Betriebsgeschwindigkeit derart überwacht, insbesondere aufgezeichnet, werden, dass auf ein Ausmaß des Fehlbetriebs rückgeschlossen werden kann.

9. Verfahren nach einem der vorstehenden Ansprüche, wobei bei einem erfassten Fehlbetrieb ein vorzugsweise optisches und/oder akustisches Warnsignal ausgegeben wird, wobei insbesondere ein Warnsignal ausgegeben wird, wenn der Fehlbetrieb für eine vorbestimmte Kontrollzeit durchgehend erfasst wird und/oder wenn eine vorbestimmte Kontrollanzahl an für einen Fehlbetrieb charakteristischen Betriebsgeschwindigkeiten ermittelt wird, und/oder Gegenmaßnahmen eingeleitet werden.

10. Vorrichtung zum Überwachen des Auftretens von Kavitation in einem Stellventil (3) und/oder auf das Stellventil (3) wirkenden Fluidschlägen, für eine prozesstechnische Anlage, wie eine chemische Anlage, eine Lebensmittel verarbeitende Anlage, ein Kraftwerk oder dergleichen, wobei die Vorrichtung dazu eingerichtet ist, das Verfahren gemäß einem der Ansprüche 1 bis 9 auszuführen.

11. Vorrichtung nach Anspruch 10, wobei eine Hubbewegung des Stellventils (3) in eine Drehbewegung eines an dem Stellventil (3) drehbar gelagerten Hebelarms (45) übertragbar ist und die Drehbewegung mittels einer vorzugsweise magnetischen Sensoreinrichtung (38) erfassbar ist, wobei insbesondere die Sensoreinrichtung (38) einen an dem Hebelarm (45) angebrachten Magnet und einen ortsfest positionierten, dem Magnet zugewandten Magnetsensor umfasst, wobei insbesondere der Magnet derart an dem Hebelarm (45) angebracht ist, dass der Magnetsensor bei einer Drehbewegung des Hebelarms (45) eine Veränderung seines elektrischen Widerstands detektiert.

12. Stellventil mit einer Vorrichtung gemäß einem der Ansprüche 10 bis 11 zum Überwachen des Auftretens von Kavitation in einem Stellventil (3) und/oder auf das Stellventil (3) wirkenden Fluidschlägen, für eine prozesstechnische Anlage, wie eine chemische Anlage, eine Lebensmittel verarbeitende Anlage, ein Kraftwerk oder dergleichen.

## Claims

1. Method for monitoring the occurrence of cavitation in a control valve (3) and/or fluid impacts acting on the control valve (3), of a process plant, such as a chemical plant, a food processing plant, a power plant or the like, wherein:
- the position of the control valve (3) is detected;
- an operating speed of the control valve (3) is determined on the basis of the detected control valve positions; and
- a reference speed associated with a malfunction in the case of cavitation and/or fluid impacts acting on the control valve (3) or an ideal operation of the control valve is determined; and
- the operating speed is compared with the reference speed.

2. Method according to claim 1, wherein the operating speed is determined from a change of the control valve positions detected between at least two successive control valve positions, preferably actuator positions, wherein in particular an operating acceleration of the control valve (3) is determined from a change of the control valve operating speed detected between at least two successive control valve operating speed, preferably actuator operating speeds.

3. Method according to one of the preceding claims, wherein the reference speed associated with a malfunction is selected from a database, wherein in particular the data base comprises control valve specific empirical values for malfunction, or is detected during initialization or calibration of the control valve (3), wherein in particular during the initialization or calibration a maximum, in particular positioner-specific, travel speed of the control valve (3) is detected.

4. Method according to claim 3, wherein if the operating speed corresponds to or exceeds the malfunction reference speed selected from the database, or if the operating speed corresponds to or exceeds the malfunction reference speed detected from the initialization or calibration of the control valve, a malfunction of the control valve (3) is identified, wherein in particular the malfunction reference speed detected from the initialization or calibration of the control valve corresponds to at least 150 %, preferably 200 %, 250 %, 300 %, 350 %, 400 %, 450 % or 500 %, of the maximum travel speed of the control valve.

5. Method according to one of the preceding claims, wherein the reference speed associated with an ideal operation is selected from a database, wherein in particular the database comprises control valve specific empirical values for ideal operation, or is detected during an initialization or calibration of the control valve (3), wherein in particular during the initialization or calibration a maximum, in particular positioner-specific, travel speed of the control valve (3) is detected.

6. Method according to claim 5, wherein if the operating speed exceeds the ideal operation reference speed selected from the database, in particular is at least 150 %, preferably 200 %, 250 %, 300 %, 350 %, 400 %, 450 % or 500 %, greater than the ideal operation reference speed, or if the operating speed exceeds the ideal operation reference speed detected from the initialization or calibration of the control valve (3), in particular exceeds the maximum travel speed of the control valve by at least 150 %, preferably 200 %, 250 %, 300 %, 350 %, 400 %, 450 % or 500 %, a malfunction of the control valve (3) is identified.

7. Method according to one of the preceding claims, wherein the occurrence of a malfunction is detected, preferably triggered, processed and/or stored, wherein in particular at least two trigger thresholds for speed values, preferably at least one trigger threshold for permissible speed values and at least one trigger threshold for impermissible speed values, are defined and the operating speed values are compared with the at least two trigger threshold values.

8. Method according to claim 7, wherein the exceeding of each one of the at least two trigger threshold values is recorded, to evaluate the operating speed, preferably to distinguish impermissible from permissible operating speed values, wherein in particular the at least two trigger threshold values are selected in such a way and the course of the operating speed is monitored, in particular recorded, in such a way that, it is possible to conclude to an extent of the malfunction.

9. Method according to one of the preceding claims, wherein in case of a detected malfunction a preferably optical and/or acoustic warning signal is emitted, wherein in particular a warning signal is emitted, if the malfunction is continuously detected for a predetermined check time and/or if a predetermined control count of operating speeds characteristic for a malfunction is determined, and/or countermeasures are initiated.

10. Device for monitoring the occurrence of cavitation in a control valve (3) and/or fluid impacts acting on the control valve (3) for a process plant, such as a chemical plant, a food processing plant, a power plant or the like, wherein the device is arranged to carry out the method according to any one of claims 1 to 9.

11. Device according to claim 10, wherein a stroke movement of the control valve (3) is transmissible into a rotary movement of a lever arm (45) rotatably mounted on the control valve (3) and the rotary movement is detectable with a preferably magnetic sensor device (38), wherein in particular the sensor device (38) comprises a magnet attached to the lever arm (45) and a stationary positioned magnetic sensor facing the magnet, wherein in particular the magnet is attached to the lever arm (45) in such a way that the magnet sensor detects a change in its electrical resistance upon a rotary movement of the lever arm (45).

12. Control valve comprising a device according to any one of claims 10 to 11 for monitoring the occurrence of cavitation in a control valve (3) and/or fluid impacts acting on the control valve (3) for a process plant, such as a chemical plant, a food processing plant, a power plant or the like.

## Revendications

1. Procédé de surveillance de l'apparition de cavitation dans une soupape de régulation (3) et/ou de chocs dus aux fluides agissant sur la soupape de régulation (3), d'une installation technique de traitement, comme une installation chimique, une installation de transformation de denrées alimentaires, une centrale électrique ou des installations analogues, sachant que :
- la position de la soupape de régulation (3) est saisie,
- une vitesse de fonctionnement de la soupape de régulation (3) est déterminée à l'aide des positions de soupape de régulation saisies, et
- une vitesse de référence attribuée à un dysfonctionnement lors de cavitation et/ou à des chocs dus aux fluides agissant sur la soupape de régulation (3) ou à un fonctionnement idéal de la soupape de régulation (3) est déterminée, et
- la vitesse de fonctionnement est comparée à la vitesse de référence.

2. Procédé selon la revendication 1, sachant que la vitesse de fonctionnement est déterminée à partir d'une modification de la position de soupape de régulation saisie entre au moins deux positions de soupape de régulation successives, de préférence des positions d'organe de réglage, sachant en particulier qu'une accélération du fonctionnement de la soupape de régulation (3) est déterminée à partir d'une modification saisie de la vitesse de fonctionnement de soupape de régulation entre au moins deux vitesses de fonctionnement de soupape de régulation successives, de préférence des vitesses de fonctionnement d'organe de réglage.

3. Procédé selon l'une quelconque des revendications précédentes, sachant que la vitesse de référence attribuée à un dysfonctionnement est choisie à partir d'une banque de données, sachant en particulier que la banque de données contient des valeurs expérimentales spécifiques aux soupapes de régulation pour dysfonctionnement ou est saisie lors d'une initialisation ou d'un étalonnage de la soupape de régulation (3),
sachant en particulier que lors de l'initialisation ou de l'étalonnage, une vitesse de déplacement maximale de la soupape de régulation (3), en particulier spécifique aux régulateurs de position, est déterminée.

4. Procédé selon la revendication 3, sachant que lorsque la vitesse de fonctionnement correspond à la vitesse de référence de dysfonctionnement choisie à partir de la banque de données ou dépasse celle-ci ou lorsque la vitesse de fonctionnement correspond à la vitesse de référence de dysfonctionnement saisie à partir de l'initialisation ou de l'étalonnage de la soupape de régulation ou dépasse celle-ci, un dysfonctionnement de la soupape de régulation (3) est identifié, sachant en particulier que la vitesse de référence de dysfonctionnement saisie à partir de l'initialisation ou de l'étalonnage de la soupape de régulation correspond au moins à 150 %, au moins à 200 %, 250 %, 300 %, 350 %, 400 %, 450 % ou 500 % de la vitesse de déplacement maximale de la soupape de régulation..

5. Procédé selon l'une quelconque des revendications précédentes, sachant que la vitesse de référence attribuée au fonctionnement idéal est choisie à partir d'une banque de données, sachant en particulier que la banque de données contient des valeurs expérimentales spécifiques aux soupapes de régulation pour un fonctionnement idéal ou est saisie lors d'une initialisation ou d'un étalonnage de la soupape de régulation (3),
sachant en particulier qu'une vitesse de déplacement maximale de la soupape de régulation (3), en particulier spécifique aux régulateurs de position, est déterminée lors de l'initialisation ou de l'étalonnage.

6. Procédé selon la revendication 5, sachant que lorsque la vitesse de fonctionnement dépasse la vitesse de référence de fonctionnement idéal choisie à partir de la banque de données, est en particulier au moins de 150 %, de préférence 200 %, 250 %, 300 %, 350 %, 400 %, 450 % ou de 500 % plus grande que la vitesse de référence de fonctionnement idéal ou lorsque la vitesse de fonctionnement dépasse la vitesse de référence de fonctionnement idéal saisie à partir de l'initialisation ou de l'étalonnage de la soupape de régulation (3), en particulier dépasse la vitesse de déplacement maximale de la soupape de régulation d'au moins 150 %, de préférence de 200 %, 250 %, 300 %, 350 %, 400 %, 450 % ou de 500 %, un dysfonctionnement de la soupape de régulation (3) est identifié.

7. Procédé selon l'une quelconque des revendications précédentes, sachant que l'apparition d'un dysfonctionnement est saisie, de préférence déclenchée, traitée et/ou mémorisée, sachant en particulier qu'au moins deux seuils de déclenchement pour les valeurs de vitesse, de préférence au moins un seuil de déclenchement pour les valeurs de vitesse admises et au moins un seuil de déclenchement pour les valeurs de vitesse non admises sont définis et les valeurs de vitesse de fonctionnement sont comparées à au moins deux valeurs seuils de déclenchement.

8. Procédé selon la revendication 7, sachant que le dépassement d'une au moins des deux valeurs seuils de déclenchement est respectivement enregistrée pour évaluer la vitesse de fonctionnement, de préférence pour distinguer les valeurs de vitesse de fonctionnement non admises de celles admises, sachant en particulier qu'au moins les deux valeurs seuils de déclenchement sont choisies et l'allure de la vitesse de fonctionnement surveillée, en particulier enregistrée de telle manière que l'on peut en déduire une importance du dysfonctionnement.

9. Procédé selon l'une quelconque des revendications précédentes, sachant que lors d'un dysfonctionnement saisi, un signal d'avertissement de préférence optique et/ou acoustique est émis, sachant en particulier qu'un signal d'avertissement est émis, lorsque le dysfonctionnement est saisi en continu pour un temps de contrôle prédéterminé et/ou lorsqu'un nombre de contrôle prédéterminé est déterminé pour des vitesses de fonctionnement caractéristiques pour un dysfonctionnement et/ou des contre-mesures sont introduites.

10. Dispositif de surveillance de l'apparition de cavitation dans une soupape de régulation (3) et/ou de chocs dus aux fluides agissant sur la soupape de régulation (3), pour une installation technique de traitement, comme une installation chimique, une installation de transformation des denrées alimentaires, une centrale électrique ou des installations analogues, sachant que le dispositif est agencé pour exécuter le procédé selon l'une quelconque des revendications 1 à 9.

11. Dispositif selon la revendication 10, sachant qu'un mouvement de levage de la soupape de régulation (3) peut être transmis dans un mouvement de rotation d'un bras de levier (45) logé pouvant tourner sur la soupape de régulation (3),
et le mouvement de rotation peut être saisi au moyen d'un dispositif de détection (38) de préférence magnétique, sachant en particulier que le dispositif de détection (38) comprend un aimant monté sur le bras de levier (45) et un capteur magnétique positionné de façon fixe, tourné vers l'aimant, sachant en particulier que l'aimant est placé sur le bras de levier (45) de telle manière que le capteur magnétique détecte lors d'un mouvement de rotation du bras de levier (45), une modification de sa résistance électrique.

12. Soupape de régulation avec un dispositif selon l'une quelconque des revendications 10 à 11 pour la surveillance de l'apparition de cavitation dans une soupape de régulation (3) et/ou de chocs dus aux fluides agissant sur la soupape de régulation (3), pour une installation technique de traitement, comme une installation chimique, une installation de transformation de denrées alimentaires, une centrale électrique ou des installations analogues.
